# EUROPÄISCHE PATENTSCHRIFT

(11) **EP 0 857 312 B1**
(45) Veröffentlichungstag und Bekanntmachung des Hinweises auf die Patenterteilung: **17.04.2002**
(21) Anmeldenummer: 96945528.6
(22) Anmeldetag: 18.10.1996
(51) Int. Cl.: G02B 6/00

(54) **AUFNAHMEANORDNUNG UND VERFAHREN ZUM HERSTELLEN EINER AUFNAHMEANORDNUNG FÜR MINDESTENS EINEN UMHÜLLTEN LICHTWELLENLEITER**
SUPPORT ARRANGEMENT FOR AT LEAST ONE SHEATHED OPTICAL FIBER AND METHOD OF PRODUCING THE SAME
DISPOSITIF DE FIXATION ET PROCEDE DE FABRICATION D'UN DISPOSITIF DE FIXATION DESTINE A AU MOINS UNE FIBRE OPTIQUE GAINEE

(30) Priorität: 27.10.1995 DE 19541139
(43) Veröffentlichungstag der Anmeldung: 12.08.1998
(73) Patentinhaber: Infineon Technologies AG, 81669 München (DE)
(72) Erfinder: WEIGEL, Hans-Dieter, D-10405 Berlin (DE)
(74) Vertreter: Maikowski, Michael, Dipl.-Ing. Dr.
(86) Internationale Anmeldenummer: DE9602024
(87) Internationale Veröffentlichungsnummer: WO9715844

(56) Entgegenhaltungen:
- DE-A- 4 303 737
- DE-C- 4 330 941
- GB-A- 2 046 472
- US-A- 4 699 462
- US-A- 4 948 222

## Beschreibung

Die Erfindung liegt auf dem Gebiet der Präparation von Enden oder Abschnitten von Lichtwellenleitern oder optischen Kabeln und betrifft eine Aufnahmeanordnung für das Ende eines Lichtwellenleiters mit einem Aufnahmebehälter mit einer Eintrittsöffnung, durch die ein endseitig unter Freigabe eines Lichtwellenleiters abgemanteltes Ende eines Lichtwellenleiterkabels eintritt, und mit einer Ausgangsöffnung, durch die der Lichtwellenleiter mit radialer Bewegungsfreiheit fixiermassenfrei austritt, mit einem Spreizkörper, der zumindest teilweise in das Ende des Kabelmantels eingeführt ist, und mit einer in den Aufnahmebehälter eingebrachten Fixiermasse, die einen Abschnitt des Lichtwellenleiters festlegt, sowie ein Verfahren zum Herstellen einer Aufnahmeanordnung.

Derartige Aufnahmeanordnungen dienen z. B. zum Anschluß eines Lichtwellenleiterendes an ein elektrooptisches Modul oder zur Kopplung mit korrespondierenden Steckverbindern. Aufnahmeanordnungen können als kopplungsfähiges Endstück den von einer Schutzhülle ummantelten Lichtwellenleiter unmittelbar abschließen oder einen vor dem Ende liegenden Abschnitt des Lichtwellenleiters umgeben, so daß der Lichtwellenleiter beiderseits der Aufnahmeanordnung weiter verläuft. In jedem Fall hat die Aufnahmeanordnung zumindest ein nachfolgend als Ausgangsöffnung bezeichnetes Ende eines Durchgangskanals zur Aufnahme des Lichtwellenleiters, aus dem der Lichtwellenleiter austritt.

Aus der US-PS 4,984,865 ist eine Aufnahmeanordnung für einen Lichtwellenleiter bekannt, der aus einem Kabelmantelende zusammen mit den Enden einer strangförmigen Zugentlastung (Aramid-Fasern) austritt. Das Kabelmantelende ist in ein mit einem Thermoplasten gefülltes Steckverbindergehäuse eingeführt. Unzulässig geringe Biegeradien des Lichtwellenleiters können bei dieser bekannten Aufnahmeanordnung nicht auftreten, weil der Lichtwellenleiter von dem Thermoplasten vollständig umgeben und fixiert innerhalb des Aufnahmeteils verläuft.

Aus der DE 27 11 670 C2 ist eine Aufnahmeanordnung in Form eines lösbaren Steckverbinders bekannt, bei dem zwei zu koppelnde Lichtleitfasern jeweils mit ihrem Endbereich in einen Zentriereinsatz eingeklebt sind. Dieser ist in ein Ende eines Rohres eingesetzt, das als Führungskörper dient und das mit dem entsprechenden Kopplungspartner zwecks Stirnseitenkontakt in eine Justierkapillare einführbar ist.

Bei einer bekannten (DE-43 03 737 A1) Aufnahmeanordnung der eingangs genannten Art tritt ein von seinem Kabelmantel unter Freigabe von zwei mit jeweils einem Schutzmantel (buffer) umhüllten Lichtwellenleiterenden und Zugentlastungsenden endseitig befreites Kabelende in eine Eingangsöffnung eines Aufnahmebehälters ein. In das Kabelmantelende ist eine Spreizhülse eingeführt, die den Mantel über die Eingangsöffnungsweite hinaus aufweitet. Die Lichtwellenleiter durchziehen einen von der Eingangsöffnung zu einer Ausgangsöffnung verlaufenden Durchgangskanal und verlassen den Aufnahmebehälter mit radialer Bewegungsfreiheit. Der Aufnahmebehälter wird teilweise mit einer Fixiermasse ausgefüllt. Die ausgangsöffnungsnahe Oberfläche der erhärteten Fixiermasse (Füllstandshöhe) liegt bei vertikaler Orientierung der Anordnung in Längsachsenrichtung vertikal beabstandet unterhalb der Ausgangsöffnung.

Bei unsachgemäßer oder unvorsichtiger Handhabung des bereits mit der Aufnahmeanordnung versehenen Kabelendes im weiteren Fertigungs- oder Montageprozeß besteht die Gefahr, daß die Lichtwellenleiter über die vergleichsweise scharfkantige Kontaktlinie zur Oberfläche der Fixiermasse gebogen werden. Diese Problematik verschärft sich bei Verwendung von Fixiermassen, die sich aufgrund von Adhäsionseffekten und Kapillarkräften an den Lichtwellenleitern hochziehen. In der Praxis hat sich nämlich bei Durchgangskanälen mit nur geringfügig größer als der Querschnitt des ummantelten Lichtwellenleiters bemessenem Querschnitt gezeigt, daß die Fixiermasse im fließfähigen Zustand aufgrund von Kapillarwirkungen unerwünscht hoch über die angestrebte Füllstandshöhe aufsteigt und dadurch dicht unterhalb der Ausgangsöffnung an dem Lichtwellenleiter anliegende scharfe Kanten bildet. Durch das Biegen unterhalb ihrer kritischen Biegeradien können Lichtwellenleiter irreversibel geschädigt werden. Nachteilhafterweise können derartige Schäden durch die schützende Umhüllung vorläufig verdeckt bleiben und erst bei der Endkontrolle oder Inbetriebnahme erkannt werden. Andererseits sind im Hinblick auf die Erzielung ausreichender Klebekräfte, die notwendige Fixiermassenmenge und deren Aushärtezeit vergleichsweise enge Durchgangskanäle erwünscht.

Um dieser Problematik zu begegnen, müssen bisher Fertigung und Montage außerordentlich sorgfältig durchgeführt und die Lichtwellenleiter vorübergehend in entsprechend ausgebildeten Fertigungsaufnahmen zumindest solange fixiert werden, bis zusätzliche dauerhafte Konstruktionselemente (beispielsweise separate Knickschutzelemente) oder entsprechende Gehäuse mit Führungen montiert sind.

Die Aufgabe der Erfindung besteht daher in der Schaffung einer Aufnahmeanordnung, die bereits unmittelbar nach dem Einbringen und Aushärten der Fixiermasse ohne zusätzliche Vorrichtungen einen zuverlässigen Schutz des umhüllten Lichtwellenleiters vor unzulässig geringen Biegeradien gewährleistet.

Diese Aufgabe wird erfindungsgemäß bei einer Aufnahmeanordnung der eingangs genannten Art dadurch gelöst, daß der Spreizkörper einen Durchgangskanal begrenzt, der sich von einem ersten, den Lichtwellenleiter eng umgebenden Kanalabschnitt auf einen in die Ausgangsöffnung mündenden zweiten Kanalabschnitt erweitert, wobei der Querschnitt des zweiten Kanalabschnitts in bezug auf den Lichtwellenleiterquerschnitt so bemessen ist, daß in dem zweiten Kanalabschnitt befindliche Fixiermasse im wesentlichen kapillarkräftefrei bleibt.

Während in dem ersten engeren Abschnitt Kapillarkraftwirkungen auf die Fixiermasse - solange diese noch dünnflüssig ist - zur sicheren und materialsparenden Festlegung des Lichtwellenleiters erzielt werden, bewirkt die gezielte Erweiterung des Durchgangskanals eine definierte Unterbindung der Kapillarwirkungen im zweiten Abschnitt. In vorteilhafter Weise ist damit die einzubringende Fixiermassenmenge erheblich reduzierbar, weil nur ein vergleichsweise schmaler Spalt zwischen dem Lichtwellenleiter und der Wandung des ersten Abschnitts auszufüllen ist. Da durch die Erweiterung andererseits ein unerwünschtes Weiterfließen oder Ansteigen der noch fließfähigen Fixiermasse in Richtung auf die Ausgangsöffnung zuverlässig verhindert ist, kann die Fixiermassenmenge ohne Rücksichtnahme auf Kapillareffekte tolerant bemessen und eingefüllt werden. Bevorzugt wird die Fixiermassenmenge so bemessen, daß der Lichtwellenleiter in dem zweiten Abschnitt weitgehend fixiermassenfrei bleibt. Dadurch wird dem Lichtwellenleiter bereits in dem Anfang des erweiterten Abschnitts eine radiale Beweglichkeit ermöglicht und die von dem ausgangsöffnungsnahen letzten Fixierungspunkt des Lichtwellenleiters bestimmte Biegegeometrie positiv beeinflußt. Die Erweiterung ermöglicht eine einfach steuerbare, planmäßige Einstellung des Abstandes zwischen Fixierungspunkt und Ausgangsöffnung.

Im Zusammenwirken mit einer Abrundung der ggf. mit dem Lichtwellenleiter in Kontakt kommenden Ränder oder Kanten der Ausgangsöffnung werden die während der Fertigungs- und Montageprozesse (ohne gewaltsames Überbiegen) maximal auftretenden Winkel bzw. Biegeradien des Lichtwellenleiters von selbst vergleichsweise gering gehalten. Der sich ohne Gewalteinwirkung von selbst maximal einstellende Winkel zwischen der Längsachse der Aufnahmeanordnung und dem Lichtwellenleiter beträgt vorteilhafterweise weniger als 45°.

Ein besonders bevorzugtes Querschnittsverhältnis der Kanalabschnitte ist gegeben, wenn sich der zweite Kanalabschnitt auf annähernd die zweifache Weite des ersten Kanalabschnitts erweitert.

Eine besonders definierte Steuerung der Kapillareffekte ist nach einer bevorzugten Weiterbildung der Erfindung möglich, indem die Erweiterung vom ersten zum zweiten Kanalabschnitt stufenartig ausgebildet ist.

Eine bevorzugte Ausgestaltung der Erfindung besteht darin, daß der Spreizkörper zwei im wesentlichen parallele Stege aufweist, die sich radial nach außen bis zum Rand des Behälters erstrecken und die Ausgangsöffnung begrenzen. Der Spreizdorn bildet in kombinatorischer Wirkung mit dem Aufnahmebehälter durch seine Stege eine lichtwellenleiterindividuelle Ausgangsöffnung, deren Größe und Kontur zur zuverlässigen Vermeidung einer Mindestbiegeradienunterschreitung dimensionierbar ist.

In ergänzender Funktion können die Stege nach einer vorteilhaften Ausbildung der Erfindung mit mindestens einem aufnahmeteilseitigen Positionierfortsatz zusammenwirken, der eine definierte Position und eine Sicherung des Spreizkörpers gegen Verdrehung bewirkt.

Der Lichtwellenleiter wird entlang des Spreizkörpers vorteilhafterweise besonders exakt dadurch geführt, daß der enge Kanalabschnitt von einer axialen Nut des Spreizkörpers gebildet ist.

Hinsichtlich der konstruktiven Auslegung hat sich als besonders vorteilhaft ein Verhältnis von Lichtwellenleiter-Durchmesser inklusive Ummantelung zur Weite des zweiten Kanalabschnitts und zum Abstand zwischen der Erweiterung und der Ausgangsöffnung von annähernd 1:2:5 erwiesen. Bei praktischen Versuchen hat sich bei einem Durchmesser des umhüllten Lichtwellenleiters von 1 mm mithin ein Abstand zwischen Erweiterung und Ausgangsöffnung von mindestens 5 mm als besonders günstig erwiesen.

Zum Herstellen einer Aufnahmeanordnung für mindestens einen umhüllten Lichtwellenleiter wird erfindungsgemäß ein Verfahren vorgeschlagen, bei dem ein Aufnahmekörper mit einem Durchgangskanal mit einem ersten Kanalabschnitt bereitgestellt wird, der sich in einen zweiten, in eine Ausgangsöffnung mündenden Kanalabschnitt erweitert, bei dem ausgangsöffnungsseitig eine Fixiermasse in den Erweiterungsbereich zur Fixierung des in den ersten Kanalabschnitt eingebrachten oder einzubringenden Abschnitts des Lichtwellenleiters appliziert wird, wobei die Weite des ersten Kanalabschnitts so bemessen wird, daß auf die Fixiermasse Kapillarkräfte ausgeübt werden, die zur Füllung des zwischen dem Lichtwellenleiter und dem ersten Kanalabschnitt bestehenden Spaltes beitragen, wogegen die Weite des zweiten Kanalabschnitts so bemessen wird, daß im zweiten Kanalabschnitt befindliche Fixiermasse von Kapillarkräften frei bleibt und bei dem die Fixiermasse so dosiert wird, daß der Lichtwellenleiter mit radialer Bewegungsfreiheit fixiermassenfrei durch die mit abgerundetem Rand versehene Ausgangsöffnung austritt.

Ausführungsbeispiele der Erfindung werden nachfolgend anhand einer Zeichnung näher erläutert; es zeigen in jeweils vergrößerter Darstellung:
die Figuren 1 und 2 Schnittdarstellungen einer nach dem erfindungsgemäßen Verfahren hergestellten Aufnahmeanordnung und
die Figuren 3 und 4 Schnittdarstellungen einer erfindungsgemäßen Aufnahmeanordnung.

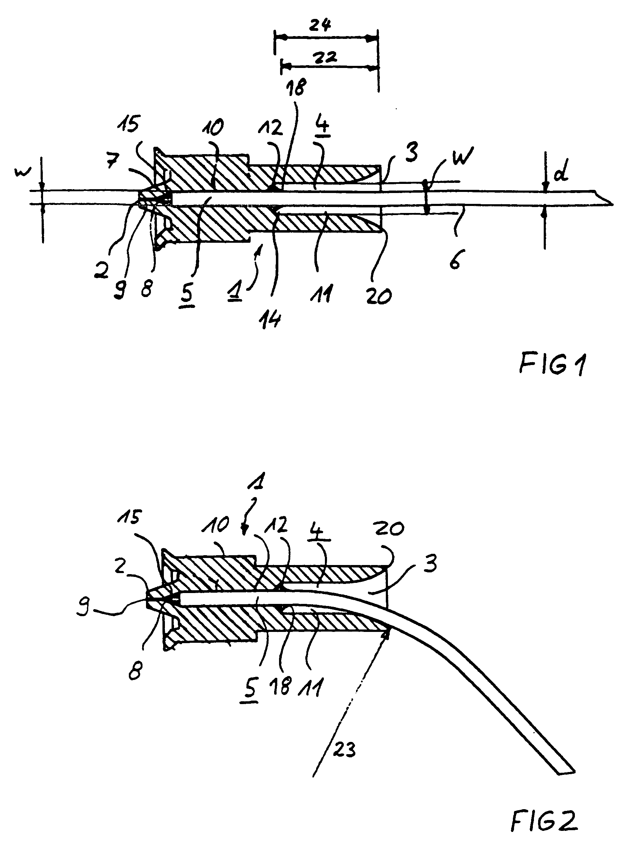

Die Aufnahmeanordnung gemäß Figuren 1 und 2 umfaßt einen Aufnahmekörper 1 mit einer Eingangsöffnung 2 und einer Ausgangsöffnung 3, zwischen denen ein Durchgangskanal 4 zur Aufnahme eines Abschnitts eines Lichtwellenleiters 5 verläuft. Der Lichtwellenleiter 5 besteht aus einem äußeren Schutzmantel ("buffer") 6, einem inneren Schutzmantel ("coating") 7 und einer Lichtleitfaser 8 als Signalleiter, deren bloßes Ende 9 die Eingangsöffnung 2 durchdringt. Je nach Anwendungsfall kann die Aufnahmeanordnung als Steckverbinder zur Kopplung mit korrespondierenden Steckverbinderteilen oder - wie dargestellt - zum Anflanschen an ein Modulgehäuse ausgebildet sein, wobei jeweils das Ende 9 der Lichtleitfaser 8 mit Hilfe der Aufnahmeanordnung präzise positionierbar und fixierbar ist.

Der Durchgangskanal 4 ist in mindestens zwei aneinandergrenzende Kanalabschnitte 10, 11 unterteilt. Der erste Abschnitt 10 ist enger ausgebildet und umschließt den Schutzmantel 6 des Lichtwellenleiters 5 bis auf einen geringen Spalt, der das Einführen des Lichtwellenleiters und ein kapillarisch unterstütztes Eindringen einer Fixiermasse 12 ermöglicht. Der zweite Abschnitt 11 ist demgegenüber erheblich erweitert. Die von der Ausgangsöffnung 3 aus applizierte aushärtbare Vergußmasse oder Fixiermasse 12 umgibt das Ende des engeren, eingangsöffnungsnahen Abschnitts 10 und den Bereich der Erweiterung 14 und füllt den Spalt zwischen dem Lichtwellenleiter 5 und der Innenwand des Abschnitts 10 aus. Vorzugsweise wird die Fixiermasse 12 vor dem Einführen des Lichtwellenleiters appliziert, so daß beim Einschieben des Lichtwellenleiters Fixiermasse auch in einen vorderen eingangsöffnungsnahen Bereich 15 zur Fixierung des inneren Schutzmantels 7 und der Lichtleitfaser 8 gelangt.

Ein erfindungswesentlicher Aspekt besteht darin, daß sich der Durchgangskanal 4 von dem engeren Abschnitt 10 auf den ausgangsöffnungsnahen zweiten Abschnitt 11 erweitert. In dem zweiten Abschnitt 11 verläuft der Lichtwellenleiter 5 frei von Fixiermasse 12. Auf die Fixiermasse 12 wirken ausgangsöffnungsseitig nach der Erweiterung 14 im Abschnitt 11 keine Kapillarkräfte. Adhäsionskräfte können allenfalls zu einem geringfügigen Hochziehen der Fixiermasse an dem Schutzmantel 6 zur Ausgangsöffnung 3 hin führen. Der Durchgangskanal 4 erweitert sich im zweiten Abschnitt 11 vorzugsweise auf eine Weite W, die das zumindest annähernd Zweifache der Weite w des ersten Abschnitts 10 beträgt. Dadurch wird eine Kapillarwirkung im zweiten Abschnitt 11 sicher vermieden, so daß ein unerwünschtes Benetzen und Fixieren des Lichtwellenleiters 5 in dem zweiten Abschnitt 11 zuverlässig verhindert ist. Dadurch hat der Lichtwellenleiter 5 in dem zweiten Abschnitt 11 eine radiale Bewegungsfreiheit, wobei bei radialer Bewegung ein Abknicken oder eine Unterschreitung des Mindestbiegeradius 23 der Lichtleitfaser 8 an der ausgangsöffnungsnächsten Kontaktstelle 18 zwischen dem Lichtwellenleiter 5 bzw. dessen äußerem Schutzmantel 6 und der Fixiermasse 12 verhindert ist.

Der mit dem Lichtwellenleiter 5 in Kontakt kommende Rand 20 der Ausgangsöffnung 3 ist abgerundet, so daß bei radialer Bewegung des Lichtwellenleiters 5 eine Mindestbiegeradienunterschreitung zuverlässig verhindert ist. (Von der Betrachtung ausgenommen sind hierbei willkürliche, gewaltsame Zurückbiegungen des Lichtwellenleiters über den Rand 20 zur Seite der Eingangsöffnung 2 hin). In kombinatorischer Wirkung sorgen die Ausgestaltung des Durchgangskanals 10 und die Abrundung des Rands 20 dafür, daß die für die Radialbeweglichkeit und die auftretenden Biegeradien kritische Kontaktstelle 18 gesteuert und vorbestimmbar in ausreichender aufnahmekörperinnenseitiger Entfernung 22 von der Ausgangsöffnung 3 ausbildbar ist. Durch die Verhinderung von Kapillareffekten kann sich die Kontaktstelle 18 nicht unerwünscht der Ausgangsöffnung nähern. Die Lage der Kontaktstelle 18 ist durch die mit erheblicher Toleranz vornehmbare Dosierung der Fixiermassenmenge einstellbar.

Bevorzugt beträgt das Verhältnis der Weite w des ersten Abschnitts 10 zur Weite W des zweiten Abschnitts 11 und zum Abstand 24 zwischen der Ausgangsöffnung 3 und der Erweiterung 14 annähernd 1 : 2 : 5.

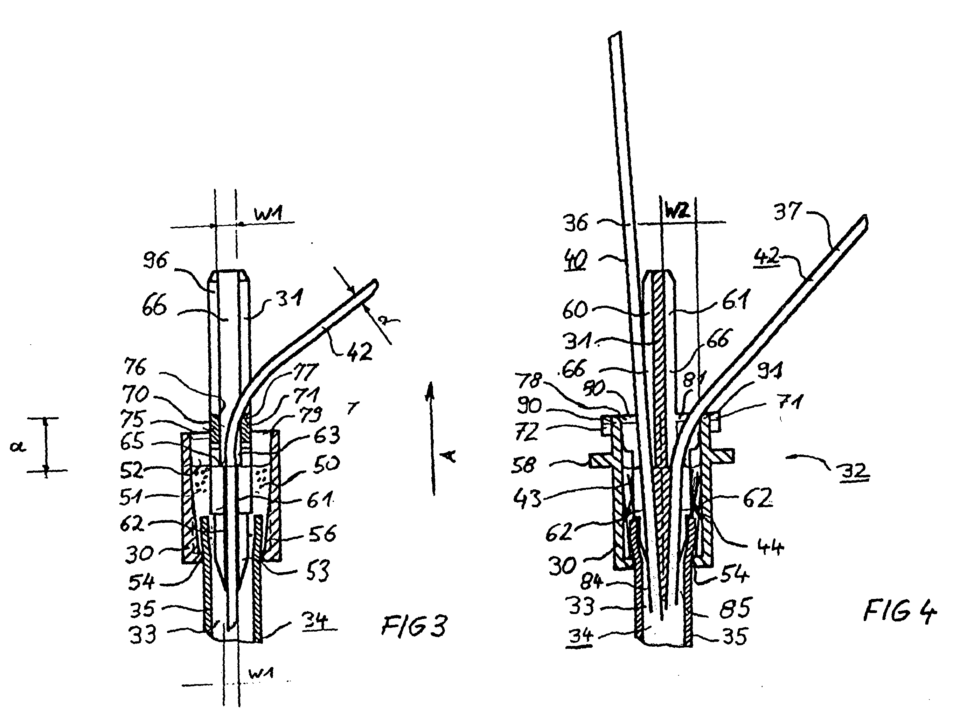

Die Figuren 3 und 4 zeigen eine erfindungsgemäße Aufnahmeanordnung für die Präparation von Enden optischer Kabel. Diese Aufnahmeanordnung umfaßt einen Aufnahmebehälter 30 und einen Spreizkörper 31, die sich zu einem Aufnahmekörper 32 ergänzen. In den Aufnahmebehälter 30 tritt eine Ende 33 eines Lichtwellenleiterkabels 34 ein. Das Lichtwellenleiterkabel ist endseitig von seinem Kabelmantel 35 befreit, wodurch zwei jeweils von einer individuellen Schutzhülle 36, 37 umgebene Lichtwellenleiter 40, 42 und Enden 43 einer strangförmigen Zugentlastung 44 (Figur 4) (beispielsweise Aramid-Fasern) freigelegt sind. Die Enden 43 und das Ende des Kabelmantels 35 sind mit einer Fixiermasse 50 in dem Innenraum 51 des Aufnahmebehälters 30 bis zu einer Füllhöhe 52 vergossen.

In das Ende des Kabelmantels 35 ist der Spreizkörper 31 mit einem Spreizdorn 53 soweit eingeführt, daß das Kabelmantelende über die Weite einer Eingangsöffnung 54 des Aufnahmebehälters 30 erweitert und dadurch gegen ein axiales Herausziehen gesichert ist. In dem Innenraum 51 des Aufnahmebehälters 30 verlaufen in Eingangsöffnungsnähe nach innen gerichtete, zum Boden des Aufnahmebehälters erhöhte Rippen 56, die die lichte Weite des Behälterinnenraums vermindern. Im Zusammenwirken mit dem Spreizkörper 31 und der Fixiermasse 50 wird das Ende des Kabelmantels 35 zusätzlich abgestützt und gegen Drehung gegenüber dem Aufnahmebehälter 30 gesichert. Die Rippen 56 ermöglichen außerdem einen ungestörten Verguß bzw. Fixiermassendurchfluß bis zur Eingangsöffnung 54. Der Aufnahmebehälter 30 weist einen Flanschansatz 58 auf, mit dem die Aufnahmeanordnung in an sich bekannter Weise (DE-43 03 737 A1) in ein Duplex-Steckergehäuse unter Ableitung der von der Zugentlastung 44 aufgenommenen Zugbeanspruchungen verdrehsicher eingebracht werden kann. Bevorzugt bestehen der Aufnahmebehälter 30 und der Spreizkörper 31 aus transparentem Material, das die Verwendung von lichtaushärtenden Substanzen als Fixiermasse erlaubt.

Der Spreizkörper 31 hat in axialer Richtung A verlaufende seitliche durchgehende Nuten 60, 61. Die Nuten 60, 61 bilden im Zusammenwirken mit dem Aufnahmebehälter 30 und dem Kabelmantel 35 jeweils einen ersten Abschnitt 62 eines Durchgangskanals 63 für die Lichtwellenleiter 40, 42. Die Axialnuten 60, 61 haben je eine Erweiterungsstufe 65, an denen sich die auf den jeweiligen Lichtwellenleiterquerschnitt abgestimmte Weite w1 des Abschnitts 62 auf ungefähr die doppelte Weite W1 unter radialer Begrenzung eines anschließenden zweiten Abschnitts 66 vergrößert.

Der Spreizkörper 31 weist für jeden Lichtwellenleiter jeweils zwei im wesentlichen parallele Stege 70, 71 bzw. 72 (der dem Steg 72 parallel gegenüberliegende Steg ist aufgrund der zeichnerischen Darstellung nicht sichtbar) auf. Die Stege erstrecken sich radial nach außen bis über den Rand 75 des Aufnahmebehälters 30 hinaus. Die den Lichtwellenleitern 40, 42 zugewandten Kanten 76, 77, 78 der Stege sind jeweils abgerundet, so daß die Lichtwellenleiter nicht scharfkantig abknicken können. Die Stege 70, 71, 72 bilden mit dem Rand 75 bzw. der abgerundeten Kante 79 des Aufnahmebehälters 30 für jeden Lichtwellenleiter eine individuelle Ausgangsöffnung 80, 81. Die Axialnuten 60 des Spreizkörpers 31 definieren im Zusammenwirken mit dem Kabelmantel 35 eine jeweils individuelle Eingangsöffnung 84, 85 für jeden Lichtwellenleiter.

Der Aufnahmebehälter 30 weist an seinem Rand 75 in axialer Verlängerung ausgebildete Erhebungen 90, 91 als Positionierfortsätze auf. Die Positionierfortsätze 90, 91 treten beim Einführen des Spreizdornes 31 zwischen die Stege (z. B. 70, 71) und positionieren damit den Spreizkörper 31 verdrehsicher. Damit ist ein Verwinden des Kabelmantels 35 und ein Verdrillen der Lichtwellenleiter 40, 42 verhindert. Zur leichteren Handhabung hat der Spreizkörper 31 einen Schaft 96, entlang dem sich die Axialnuten 60, 61 fortsetzen.

Durch die Verbreiterung der Nuten 60 an der Erweiterungsstufe 65 wird ein weiterer kapillareffektbedingter Anstieg der Fixiermasse 50 in axialer Richtung A über die Erweiterung hinaus zu den Ausgangsöffnungen 80, 81 hin verhindert, weil in dem zweiten Abschnitt 66 des Durchgangskanals 63 durch ausreichende Spalte keine Kapillarkräfte auf die Fixierungsmasse 50 ausgeübt werden. Während die Kapillarwirkung zur Durchdringung der unterhalb der Erweiterungsstufe liegenden Bereichs zur Einbettung der Lichtwellenleiter, der Zugentlastung und des Kabelmantels erwünscht ist, wird gezielt oberhalb der Erweiterung die Ausbildung von Fixiermassenkontakten zu den Lichtwellenleitern verhindert. Der Abstand a der Ausgangsöffnungen 80, 81 zu der Erweiterung bzw. zur Füllhöhe ist-vorzugsweise auf das Fünffache der Weite w1 bemessen. Die in Figur 4 zur Verdeutlichung dargestellte, zur Weite W1 (Figur 3) rechtwinklige Weite W2 ist vorzugsweise entsprechend der Weite W1 bemessen.

Bei einer praktischen Realisierung mit einem Lichtwellenleiterdurchmesser d von 1 mm wird die durch den Abstand der Stege 70, 71 vorgegebene Weite W1 vorzugsweise zu 2 mm bemessen. Die Weite w1 wird annähernd gleich der Lichtwellenleiterdurchmesser und damit zu ca. 1 mm bemessen. Der Abstand a beträgt 5 mm.

Als Fixiermasse wird bevorzugt ein lichtaktivierbares oder lichthärtbares Harzsystem verwendet. Derartige bekannte Harzsysteme (z. B. das unter dem Handelsnamen KATIOBOND 050 der Firma DELO bekannte lichtaktivierbare Harzsystem) erlauben eine gezielte Aktivierung der Vergußmasse. Alternativ können auch zwei Komponenten-Epoxy-Harze verwendet werden.

## Patentansprüche

1. Aufnahmeanordnung für das Ende eines Lichtwellenleiters
- mit einem Aufnahmebehälter (30) mit einer Eintrittsöffnung (54), durch die ein endseitig unter Freigabe eines Lichtwellenleiters (40) abgemanteltes Ende (33) eines Lichtwellenleiterkabels (34) eintritt, und mit einer Ausgangsöffnung (80), durch die der Lichtwellenleiter (40) mit radialer Bewegungsfreiheit fixiermassenfrei austritt,
- mit einem Spreizkörper (31), der zumindest teilweise in das Ende des Kabelmantels (35) eingeführt ist, und
- mit einer in den Aufnahmebehälter (30) eingebrachten Fixiermasse (50), die einen Abschnitt des Lichtwellenleiters (40) festlegt,
**dadurch gekennzeichnet, daß**
- der Spreizkörper (31) einen Durchgangskanal (63) begrenzt, der sich von einem ersten, den Lichtwellenleiter (40) eng umgebenden Kanalabschnitt (62) auf einen in die Ausgangsöffnung (80) mündenden zweiten Kanalabschnitt (66) erweitert, wobei der Querschnitt des zweiten Kanalabschnitts (66) in bezug auf den Lichtwellenleiterquerschnitt so bemessen ist, daß in dem zweiten Kanalabschnitt (66) befindliche Fixiermasse (50) im wesentlichen kapillarkräftefrei bleibt.

2. Anordnung nach Anspruch 1,
**dadurch gekennzeichnet, daß**
sich der zweite Kanalabschnitt (66) auf annähernd die zweifache Weite (w1) des ersten Kanalabschnitts (62) erweitert.

3. Anordnung nach Anspruch 1 oder 2,
**dadurch gekennzeichnet, daß**
die Erweiterung (65) vom ersten (62) zum zweiten Kanalabschnitt (66) stufenartig ausgebildet ist.

4. Anordnung nach einem der vorangehenden Ansprüche,
**dadurch gekennzeichnet, daß**
der Spreizkörper (31) zwei im wesentlichen parallele Stege (70,71) aufweist, die sich radial nach außen bis zum Rand (75) des Behälters (30) erstrecken und die Ausgangsöffnung (80) begrenzen.

5. Anordnung nach Anspruch 4,
**dadurch gekennzeichnet, daß**
der Aufnahmebehälter (30) zumindest einen mit den Stegen (70,71) zusammenwirkenden Positionierfortsatz (91) aufweist.

6. Anordnung nach einem der vorangehenden Ansprüche,
**dadurch gekennzeichnet, daß**
der Spreizkörper (31) einen Schaft (96) aufweist.

7. Anordnung nach einem der vorangehenden Ansprüche, **dadurch gekennzeichnet, daß**
der erste Kanalabschnitt (62) von einer axialen Nut (60,61) des Spreizkörpers (31) begrenzt ist.

8. Anordnung nach einem der vorangehenden Ansprüche,
**dadurch gekennzeichnet, daß**
das Verhältnis des Lichtwellenleiter-Durchmessers (d) inklusive Ummantelung (6) zur Weite (W) des zweiten Kanalabschnitts (11) und zum Abstand (24) zwischen der Erweiterung (14) und der Ausgangsöffnung (3) annähernd 1 : 2 : 5 beträgt.

9. Verfahren zum Herstellen einer Aufnahmeanordnung für mindestens einen umhüllten Lichtwellenleiter
- bei dem ein Aufnahmekörper (1) mit einem Durchgangskanal (4) mit einem ersten Kanalabschnitt (10) bereitgestellt wird, der sich über einen Erweiterungsbereich (14) in einen zweiten, in eine Ausgangsöffnung (3) mündenden Kanalabschnitt (11) erweitert,
- bei dem ausgangsöffnungsseitig eine Fixiermasse (12) in den Erweiterungsbereich (14) zur Fixierung des in den ersten Kanalabschnitt (10) eingebrachten oder einzubringenden Abschnitts des Lichtwellenleiters (5) appliziert wird,
- - wobei die Weite (w) des ersten Kanalabschnitts (10) so bemessen wird, daß auf die Fixiermasse (12) Kapillarkräfte ausgeübt werden, die zur Füllung des zwischen dem Lichtwellenleiter (5) und dem ersten Kanalabschnitt (10) bestehenden Spaltes beitragen, wogegen die Weite des zweiten Kanalabschnitts (11) so bemessen wird, daß im zweiten Kanalabschnitt (11) befindliche Fixiermasse (12) von Kapillarkräften frei bleibt und
- bei dem die Fixiermasse (12) so dosiert wird, daß der Lichtwellenleiter (5) mit radialer Bewegungsfreiheit fixiermassenfrei durch die mit abgerundetem Rand (20) versehene Ausgangsöffnung (3) austritt.

## Claims

1. Holding arrangement for the end of an optical fibre conductor
- having a receptacle (30) with an inlet opening (54) through which an end (33), which is stripped at the end revealing an optical fibre conductor (40), of an optical fibre cable (34) enters, and having an outlet opening (80) through which the optical fibre conductor (40) emerges with radial freedom of movement and free of fixing compound,
- having a spreading body (31) which is at least partially inserted into the end of the cable sheath (35), and
- having a fixing compound (50) which is introduced into the receptacle (30) and fixes a section of the optical fibre conductor (40),
**characterized in that**
- the spreading body (31) bounds a through-channel (63) which expands from the first cable section (62), which closely surrounds the optical fibre conductor (40) to a second cable section (66), which opens into the outlet opening (80), the cross section of the second cable section (66) being dimensioned with respect to the optical fibre conductor cross section such that fixing compound (50) which is located in the second cable section (66) remains essentially free of capillary forces.

2. Arrangement according to Claim 1,
**characterized in that** the second cable section (66) expands to approximately twice the width (w1) of the first cable section (62).

3. Arrangement according to Claim 1 or 2,
**characterized in that**
the expansion (65) from the first cable section (62) to the second cable section (66) is designed like a step.

4. Arrangement according to one of the preceding claims,
**characterized in that**
the spreading body (31) has two essentially parallel webs (70, 71) which extend radially outwards as far as the rim (75) of the container (30) and bound the outlet opening (80).

5. Arrangement according to Claim 4,
**characterized in that**
the receptacle (30) has at least one positioning projection (91) which interacts with the webs (70, 71).

6. Arrangement according to one of the preceding claims,
**characterized in that**
the spreading body (31) has a shaft (96).

7. Arrangement according to one of the preceding claims,
**characterized in that**
the first channel section (62) is bounded by an axial groove (60, 61) in the spreading body (31).

8. Arrangement according to one of the preceding claims,
**characterized in that**
the ratio of the optical fibre conductor diameter (d), including the sheath (6), to the width (W) of the second cable section (11) and the distance (24) between the expansion (14) of the outlet opening (3) is approximately 1:2:5.

9. Method for producing a holding arrangement for at least one sheathed optical fibre conductor
- in which a holding body (1) having a through-channel (4) with a first channel section (10) is provided which expands over an expansion region (14) into a second channel section (11), which opens into an outlet opening (3),
- in which, on the outlet opening side, a fixing compound (12) is applied into the expansion region (14) in order to fix that section of the optical fibre conductor (5) which is introduced or is to be fitted into the first channel section (10),
-- the width (w) of the first channel section (10) being dimensioned such that capillary forces are exerted on the fixing compound (12) which contribute to filling the gap which exists between the optical fibre conductor (5) and the first channel section (10), while in contrast the width of the second channel section (11) is dimensioned such that fixing compound (12) which is located in the second channel section (11) remains free of capillary forces, and
- in which the fixing compound (12) is metered such that the optical fibre conductor (5) emerges through the outlet opening (3), which is provided with a rounded rim (20), with radial freedom of movement and free of fixing compound.

## Revendications

1. Dispositif de réception de l'extrémité d'une fibre optique
- comprenant une boîte (30) de réception ayant une ouverture (54) d'entrée, par laquelle entre une extrémité (33) d'un câble (34) à fibre optique dont on a enlevé du côté de l'extrémité la gaine en mettant à nu une fibre (40) optique, et ayant une ouverture (80) de sortie, par laquelle la fibre (40) optique sort en étant exempte de toute composition d'immobilisation et en ayant une liberté de mouvement radial,
- comprenant une pièce (31) d'écartement, qui est introduite au moins en partie dans l'extrémité de la gaine (35) du câble et
- comprenant une composition (50) d'immobilisation introduite dans la boîte (30) de réception et fixant un tronçon de la fibre (40) optique,
**caractérisé en ce que**
- la pièce (31) d'écartement délimite un canal (63) de passage qui s'élargit d'un premier tronçon (62) de canal entourant étroitement la fibre (40) optique à un deuxième tronçon (70) de canal débouchant dans l'ouverture (80) de sortie, la section transversale du deuxième tronçon (66) de canal étant telle, par rapport à la section transversale de la fibre optique, que la composition (50) d'immobilisation se trouvant dans le deuxième tronçon (66) de canal reste sensiblement exempte de force de capillarité.

2. Dispositif selon la revendication 1, **caractérisé en ce que** le deuxième tronçon (66) de canal s'élargit jusqu'à avoir à peu près deux fois la largeur (w1) du premier tronçon (62) de canal.

3. Dispositif selon la revendication 1 ou 2, **caractérisé en ce que** l'élargissement (65) du premier (62) ou deuxième (66) tronçon de canal s'effectue par paliers.

4. Dispositif selon l'une des revendications précédentes, **caractérisé en ce que** la pièce (31) d'écartement comporte deux nervures (70, 71) qui s'étendent radialement vers l'extérieur jusqu'au bord (75) de la boîte (30) et qui délimitent l'ouverture (80) de sortie.

5. Dispositif selon la revendication 4, **caractérisé en ce que** la boîte (30) de réception comporte au moins un prolongement (91) de mise en position coopérant avec les nervures (70, 71).

6. Dispositif selon l'une des revendications précédentes, **caractérisé en ce que** la pièce (31) d'écartement comporte une tige (96).

7. Dispositif selon l'une des revendications précédentes, **caractérisé en ce que** le premier tronçon (62) de canal est délimité par une gorge (60, 61) axiale de la pièce (31) d'écartement.

8. Dispositif selon l'une des revendications précédentes, **caractérisé en ce que** le rapport du diamètre (d) de la fibre optique, y compris la gaine (6), à la largeur (W) du deuxième tronçon (11) de canal et à la distance entre l'élargissement (14) et l'ouverture (3) de sortie est d'environ 1:2:5.

9. Procédé de fabrication d'un dispositif de réception d'au moins une fibre optique gainée
- dans lequel on met à disposition une pièce (1) de réception ayant un canal (4) de passage comprenant un premier tronçon (10) de canal, qui s'élargit sur une partie (14) d'élargissement en un deuxième tronçon (11) de canal débouchant dans une ouverture (3) de sortie,
- dans lequel on applique, du côté de l'ouverture de sortie, une composition (12) d'immobilisation dans la partie (4) d'élargissement en vue d'immobiliser le tronçon de la fibre (5) optique introduit ou à introduire dans le premier tronçon (2) de canal,
-- la largeur (w) du premier tronçon (10) de canal étant telle qu'il s'applique sur la composition (12) d'immobilisation des forces capillaires qui contribuent à remplir l'intervalle existant entre la fibre (5) optique et le premier tronçon (10) de canal, tandis que la largeur du deuxième tronçon (11) de canal est telle que de la composition (12) d'immobilisation se trouvant dans le deuxième tronçon (11) de canal reste exempte de force de capillarité et
- dans lequel on introduit de manière dosée la composition (12) d'immobilisation de façon que la fibre (5) optique sorte par l'ouverture (3) de sortie munie de bords (20) arrondis en étant exempte de composition d'immobilisation et en ayant une liberté de déplacement radial.
